# EUROPEAN PATENT APPLICATION

(11) **EP 3 513 969 A1**
(43) Date of publication of application: **24.07.2019**
(21) Application number: 18168314.5
(22) Date of filing: 19.04.2018
(51) Int. Cl.: B32B 27/12, B32B 27/36, C08L 67/02

(54) **RECYCLABLE LAMINATED FABRIC**

(30) Priority: 17.01.2018 KR 20180005996
(71) Applicant: Youngil Co. Ltd., Gyeonggi-Do 464-874 (KR)
(72) Inventor: LEE, Ho-Young, 472-725 Gyonggi-o (KR); LEE, Chung-Jin, 13626 Gyeonggi-do (KR)
(74) Representative: Richardt Patentanwälte PartG mbB

(57) **Abstract**

The present invention relates to a recyclable laminated fabric, and more particularly to a PBT elastomer laminated fabric produced by laminating a PBT (polybutylene terephthalate) elastomer on a polyester fabric to a predetermined thickness. The laminated fabric is recyclable and has excellent heat resistance, cold resistance, weather resistance, printability, and adhesiveness and environmentally friendly properties.

## Description

### BACKGROUND OF THE INVENTION

### Field of the Invention

The present invention relates to a recyclable laminated fabric, and more preferably to a PBT elastomer resin laminated fabric which is recyclable and has excellent heat resistance, cold resistance, weather resistance, printability, adhesiveness and environmentally friendly properties.

### Description of the Prior Art

In general, as fabrics for laminated fabrics, cotton, nylon or polyester based materials are currently mainly used, and as resins for laminated fabrics, PVC, polyurethane, PP or PE resins are mainly used. PVC resin has been used as a raw material for a laminated fabric due to its excellent processability, printability, adhesiveness, weather resistance and physical properties such as tensile strength, but has been significantly replaced with other resins such as polyurethane, PP or PE, because it causes toxic or environmental problems. However, polyurethane resin has poor processability and shows reduced physical properties due to hydrolysis, and PP or PE resin or olefinic elastomers have poor printability and adhesiveness, and styrene-based block copolymers have poor adhesiveness, weather resistance and oil resistance. For these reasons, these resins fail to completely replace PVC resin laminated fabrics. In addition these resins are also hardly recyclable, and thus are disposed of as waste by methods such as incineration.

As fabrics for laminated fabrics, cotton, nylon or polyester fabrics are generally used, and as resins for laminated fabrics, PVC, polyurethane, PE or PP resins are mainly used. Among them, laminated fabrics comprising a polyester fabric and a PVC resin have been significantly replaced with other resins due to the toxic and environmental problems of the PVC resin. However, the PVC resin is still considerably used because of its excellent physical properties. In addition, synthetic leather comprising an environmentally friendly resin such as polyurethane, PE or PP resin, or a laminated fabric such as Tarpaulin, is partially recyclable in some cases, but is hardly recyclable and causes serious environmental problems. Background arts related to the present invention include Korean Patent No. 1004614, entitled "PETG-based decorative sheet having formability similar to that of PVC" (Patent Document 1). Patent Document 1 discloses a decorative sheet comprising a PETG alloy resin prepared by alloying a polyethylene terephthalate glycol (PETG) resin with an elastomer resin, wherein the elastomer resin is an elastomer resin prepared by copolymerizing a polybutylene terephthalate (PBT) resin with polyether glycol. The technology disclosed in Patent Document 1 provides formability similar to that of PVC and is used mainly for a hard sheet, a foam container or the like, but has a problem in that it has difficulty in manufacturing a soft film or a soft sheet, due to difficulty in softening.

### Prior Art Documents

### Patent Documents

(Patent Document 1) Korean Patent No. 1004614, entitled "PETG-based decorative sheet having formability similar to that of PVC"

### SUMMARY OF THE INVENTION

The present invention has been made in order to solve the above-described problems occurring in the prior art, and it is an object of the present invention to provide a recyclable, environmentally friendly laminated fabric composed of a PBT elastomer resin and a polyester-based fabric, in which the laminated fabric may be used for general applications such as furniture or bags, has excellent processability, adhesiveness, printability and weather resistance, has good heat resistance and cold resistance compared to PVC, and may replace PVC resin-laminated fabrics which could not be replaced with laminated fabrics composed of various fabrics and polyurethane, PP, PE or an olefinic elastomer.

Generally, an air boat or an air tube is made of rubber or PVC tarpaulin, and is required to have excellent water resistance and adhesiveness, and for this reason, hydrolysable polyurethane or a PP, PE or olefinic elastomer resin having poor adhesiveness cannot be used for such air boats or air tubes. In addition, an air boat or air tube made of rubber and a fabric is heavy in weight, and an air boat or air tube made of PVC resin tarpaulin is difficult to use in winter, due to its poor cold resistance. In addition, tarpaulin, which is used for printed advertising boards, is also used in a mixture with an olefinic elastomer replacing a portion of PP or PE, but is used in very limited cases due to its poor adhesiveness and printability, and PVC tarpaulin is used in most cases. A fabric for a laminated fabric comprising a resin such as PVC or polyurethane, which has excellent physical properties, is composed of cotton or a polyester-based fabric, and this laminated fabric is not recyclable due to heterogeneity due to the fabric and the resin. However, the recyclable laminated fabric of the present invention is a 100% recyclable laminated fabric.

To achieve the above object, the present invention provides a recyclable laminated fabric produced by laminating a polybutylene terephthalate (PBT) elastomer on a polyester fabric to a predetermined thickness.

This may be advantageous as a PBT elastomer is an environmentally friendly resin comprising a PBT resin as a main material. A laminated fabric composed of the PBT elastomer and a polyester-based fabric is 100% recyclable and can replace laminated fabric comprising PVC resin, due to its excellent physical properties.

In the recyclable laminated fabric according to embodiments of the present invention, the PBT elastomer may comprise a mixture of 100 parts by weight of a PBT resin, 10 to 120 parts by weight of an environmentally friendly plasticizer, and 10 to 120 parts by weight of a thermoplastic copolyester elastomer (TPEE) resin.

In the recyclable laminated fabric according to embodiments of the present invention, 20 to 100 wt% of the PBT resin may be replaced with PET-G (glycol-modified polyethylene terephthalate) resin.

In the recyclable laminated fabric according to embodiments of the present invention, the PBT elastomer may further comprise, based on 100 parts by weight of the PBT resin, 5 to 100 parts by weight of a styrene-based block copolymer and 5 to 100 parts by weight of a paraffin-based oil.

In the recyclable laminated fabric according to embodiments of the present invention, the PBT elastomer may further comprise, based on 100 parts by weight of the PBT resin, 10 to 100 parts by weight of an acrylic rubber, an acrylic rubber-based copolymer, a butadiene rubber or a butadiene rubber-based copolymer.

In the recyclable laminated fabric according to embodiments of the present invention, the PBT elastomer may further comprise, based on 100 parts by weight of the PBT resin, 10 to 120 parts by weight of a vegetable oil.

As the laminated fabric according to embodiments of the present invention is recyclable, the laminated fabric is an environmentally friendly laminated fabric.

According to embodiments of the invention, the laminated fabric in addition comprises other materials such as PET-G, TPEE, a styrene-based block copolymer, a vegetable oil and/or an environmentally friendly plasticizer.

According to embodiments of the invention, the laminated fabric is recyclable, the laminated fabric is used for manufacturing fabrics which are designed for being brought into contact with water, e.g. air boats or water tubes or air tubes, and/or for manufacturing a printable fabric, e.g. a fabric for banner printing.

### DETAILED DESCRIPTION OF THE INVENTION

Hereinafter, the present invention will be described in detail with reference to the following examples. However, these examples are provided for better understanding of the present invention, and the scope of the present invention is not limited to these examples.

Hereinafter, preferred embodiments of the present invention will be described in detail.

The term "laminated fabric" generally refers to synthetic leather (vinyl leather), tarpaulin or the like, which is an at least two-layer fabric comprising a film-shaped resin laminated on a fabric. Thus, the adhesiveness between the fabric and the resin and printability are important factors. To provide a resin composition having such properties, the present invention provides a composition comprising a PBT resin and other additives such as PET-G, TPEE, a styrene-based block copolymer, an environmentally friendly plasticizer, a vegetable oil, a processing aid, a flame retardant, a filler, a weather resistance enhancer, and a compatibilizer.

The recyclable, environmentally friendly laminated fabric is produced by laminating a PBT(polybutylene terephthalate) elastomer on a polyester fabric to a predetermined thickness.

### Experimental Example 1

The present invention is directed to a laminated fabric produced by laminating a film made of a PBT resin elastomer on a polyester fabric to form an at least two-layer structure. In general, a PVC resin which is used for a PVC laminated fabric is a soft PVC film is mainly a soft PVC film having a plasticizer content of 40 to 60 parts by weight based on 100 parts by weight of PVC and having a shore A hardness of about 85 to 95. In this experiment, the physical properties of PVC, LDPE and LLDPE, which are mainly used for laminated fabrics, were examined comparatively with those of the PBT elastomer.

**Table 1**

| Kind of resin | Shore A hardness | Tensile strength (kgf/mm²) | Tensile strength (kgf/mm²) | Elongation (%) |
|---|---|---|---|---|
| Example 1: PVC | 95 ± 3 | 1.25 | 2.06 | 327 |
| Example 2: PVC | 88 ± 3 | 1.23 | 1.78 | 356 |
| Example 3: PVC | 85 ± 3 | 1.21 | 1.60 | 354 |
| Example 4: PBT elastomer | 95 ± 3 | 1.14 | 2.14 | 349 |
| Example 5: PBT elastomer | 88 ± 3 | 1.14 | 1.52 | 430 |
| Example 6: PBT elastomer | 85 ± 3 | 1.12 | 1.33 | 419 |
| Example 7: LDPE | 94 ± 3 | 0.92 | 1.14 | 290 |
| Example 8: LLDPE (Hanwha; 3120) | 96 ± 3 | 0.94 | 1.34 | 184 |
| Example 9: Olefinic elastomer | 85 ± 3 | 0.99 | 1.46 | 710 |

| | | | | |
|---|---|---|---|---|
| LDPE ; 722 (Hanwha Chemical Model Number); LLDPE; 3120 (Hanwha Chemical Model Number). | | | | |

As shown in Examples 1 to 9, the physical properties of the resins that are mainly used for production of laminated fabrics were comparatively examined. Generally, when the thickness of the film is thick, a soft resin having low hardness is selected.

In Examples 1 to 6, the physical properties of PVC and the PBT elastomer were compared. As a result, at a shore A hardness of 95, the PBT elastomer had better physical properties than the PVC, but at low shore A hardness such as 88 and 85, the PVC resin had better physical properties than the PBT elastomer, and the PVC resin or the PBT elastomer had better physical properties than LDPE or LLDPE. The olefinic elastomer that is mainly used for the production of low-hardness products showed excellent physical properties at low hardness. Generally, the tensile strength of a laminated fabric tends to be determined by the tensile strength of the fabric of the laminated fabric.

From the experimental results in Table 1 above, it is considered that the physical properties of a laminated fabric comprising the PBT elastomer will be similar to those of a laminated fabric comprising the PVC resin.

### Experimental Example 2

In this experiment, a nonwoven fabric was selected from among fabrics, and the physical properties of laminated fabrics comprising the selected nonwoven fabric were tested.

As fabrics for laminated fabrics, woven fabrics and nonwoven fabrics are mainly used. The nonwoven fabrics are mainly made of polyester resin or PP resin. The polyester nonwoven fabric has a thin thickness and high tensile strength, is inexpensive compared to woven fabrics, and has good adhesion to the PBT elastomer. Thus, the physical properties of laminated fabrics comprising the polyester nonwoven fabric were tested as shown in the Examples below.

**Table 2**

| Examples | Thickness (mm) | Tensile strength (kg/5 cm) |
|---|---|---|
| PBT elastomer | | 171 |
| 1. Nonwoven fabric 30 g/m² | 0.14 | |
| Laminated on the upper side | 0.38 | 208 kg/cm² |
| Laminated on the upper and lower sides | 0.57 | 286 |
| 2. Nonwoven fabric 70 g/m² | | |
| Laminated on the upper side | 0.39 | 360 |
| Laminated on the upper and lower sides | 0.66 | 520 |
| 1. Nonwoven fabric 100 g/m² | | |
| Laminated on the upper side | 0.42 | 574 |
| Laminated on the upper and lower sides | 0.7 | 776 |

As shown in Table 2 above, the tensile strengths of laminated fabrics produced by laminating the PBT elastomer on nonwoven fabrics were compared. In Example 1, the nonwoven fabric had a thickness of 0.14 mm, and there was no obvious improvement. However, as shown in Examples 2 and 3, the PBT elastomer laminated fabrics comprising the nonwoven fabric having a thick thickness showed improved physical properties, suggesting that these laminated fabrics can replace laminated fabrics comprising a resin such as PVC or polyurethane, are recyclable, and will greatly contribute to environmental improvement.

### Experimental Example 3

In this experiment, a recycling test was performed.

Resin recycling is generally achieved by crushing resin waste and producing products from the crushed resin by an injection or extrusion molding process. Here, injection molded products are mainly produced rather than extrusion-molded products. The extrusion molding process shows a high defect rate due to foreign bodies contained in recycled resins.

In this experiment, the laminated fabric composed of the polyester fabric and the PBT elastomer is recyclable only when it is subjected to a compounding process and pelletized. Because there is a great difference between the processing temperature of the polyester fiber and the processing temperature of the PBT elastomer, it is impossible to process the laminated fabric into a product by a simple crushing process.

PVC laminated fabrics cannot be mixed due to the non-compatibility and difference in melting point between the cotton or polyester fabric and the PVC resin. Generally, the processing temperature of PVC and polyurethane is 200°C or below, and the processing temperature of the polyester fabric is 250°C to 300°C.

The processing temperature of fibers forming a woven fabric is 280 to 300°C, and the processing temperature of monofilaments forming a nonwoven fabric is 250 to 280°C, which is lower than the processing temperature of the fibers. The PBT elastomer that is used in the present invention has a processing temperature range from 200 to 280°C, shows no carbonization even at 300°C, is recyclable due to its excellent compatibility with the polyester fabric, and shows excellent physical properties. Thus, it can be recycled into a product whose physical properties do not substantially change. PVC resin shows no change in its physical properties even after recycling, but polyurethane resin shows a significant decrease in its physical properties after recycling.

**Table 3**

| | Compounding temperature (°C) | | | | |
|---|---|---|---|---|---|
| | Heater Nos. 1 and 2 | Heater Nos. 3, 4,5 and 6 | Heater Nos. 7 and 8 | Heater Nos. 9 and 10 | Adaptor and dies |
| Polyester woven fabric | 250 | 300 | 280 | 250 | 230 |
| Polyester non-woven fabric | 250 | 280 | 250 | 230 | 200 |

In Experimental Example 3, experiments on waste laminated fabrics comprising a PBT elastomer film laminated on a woven fabric or a nonwoven fabric were performed at the compounding temperatures shown in Table 3 above. As a result, pellet-type good regenerated compounds were formed, and the nonwoven fabric was regenerated in a good manner such that it could be extruded. Until now, it has been almost impossible to regenerate fabrics alone. However, the laminated fabric composed of the PBT elastomer film and the polyester fabric can be regenerated. Thus, it is believed that the laminated fabric composed of the PBT elastomer film can replace non-recyclable laminated fabric products comprising PVC resin or polyurethane resin.

Processing of the laminated fabric composed of the polyester fabric and the PBT elastomer may be performed by the same method as that used for a laminated fabric composed of a fabric and a PVC resin. For this processing, a processing method using T-dies is preferred rather than a calendering method. In addition, when the method using T-dies is used, the processed product has good physical properties, and processing is also easily performed. This is believed to be because the PBT elastomer has a processing temperature higher than that of the PVC resin and has a melting temperature lower that of the PVC resin.

In particular, the PBT elastomer that is used in the present invention may comprise a mixture of 100 parts by weight of a PBT resin, 10 to 120 parts by weight of an environmentally friendly plasticizer and 10 to 120 parts by weight of a TPEE (thermoplastic copolyester elastomer) resin.

In the PBT elastomer resin, a PBT resin having excellent cold resistance, heat resistance and weather resistance is used as a base resin, an environmentally friendly plasticizer is used to reduce hardness, and a TPEE resin having good heat resistance, weather resistance and cold resistance and excellent miscibility and compatibility with other resins is used to improve physical properties such as tensile strength and elongation.

The PBT (polybutylene terephthalate) resin is produced by reacting terephthalic acid with 1,4-butanediol. Among various EP (engineering plastic) resins, the PBT resin is a crystalline resin having excellent heat resistance, chemical resistance and electrical properties, shows a short molding cycle due to its high crystallization rate, has excellent weather resistance, friction resistance, abrasion resistance and dimensional stability properties, and is mainly used for electrical, electronic and automotive parts. In particular, the PBT resin has excellent resistance, shows an insignificant change in its physical properties even at high temperatures, can be used for a long period of time even at 120 to 130°C, and is not deformed even at high temperatures under high loads. It has a melting point of 220 to 225°C. The TPEE (thermoplastic copolyester elastomer) resin has the characteristics of both a block copolymer composed of a hard segment and a soft segment and an engineering plastic resin, and has excellent heat resistance, cold resistance and mechanical properties.

If the TPEE (thermoplastic copolyester elastomer) resin is added in an amount of less than 10 parts by weight, it will not exhibit the effect of improving physical properties such as tensile strength and elongation, and if the TPEE resin is added in an amount of more than 120 parts by weight, it will reduce economic efficiency. For these reasons, the TPEE resin is preferably added in an amount of 10 to 120 parts by weight.

If the environmentally friendly plasticizer is added in an amount of less than 10 parts by weight, it will not exhibit the effect of reducing hardness, and if the environmentally friendly plasticizer is added in an amount of more than 120 parts by weight, it will deteriorate durability. For these reasons, the environmentally friendly plasticizer is preferably added in an amount of 10 to 120 parts by weight.

In particular, a portion or the whole of the PBT resin may be replaced with a PETG (glycol-modified polyethylene terephthalate) resin having good compatibility and processability so as to improve the processability of the laminated fabric.

If the PET-G resin replaces less than 20 wt% of the PBT resin, it will not exhibit the effect of improving processability. For this reason, 20 to 100 wt% of the PBT resin is preferably replaced with the PET-G (glycol-modified polyethylene terephthalate) resin.

The PET-G (glycol-modified polyethylene terephthalate) resin is a non-crystalline resin produced by copolymerizing a PET resin with CHDM (1,4-cyclohexanedimethanol) as a comonomer to improve the physical properties and processability of the PET resin. It is transparent, has excellent gloss, printability, impact resistance and chemical resistance, and has a broad processing temperature range. Furthermore, it is an environmentally friendly resin which contains no environmental hormone and generates no toxic substance when being disposed by incineration. In addition, it is relatively inexpensive, is used for hard sheets, food containers and the like, and has a processing temperature as low as about 190 to 200°C. Generally, it is process using high frequency at a temperature of 160 to 180°C, and is preferably foamed using a foaming agent at a temperature of 160 to 190°C.

In addition, a vegetable oil may further be added in an amount of 10 to 120 parts by weight based on 100 parts by weight.

If the vegetable oil is added in an amount of less than 10 parts by weight, it will not exhibit the effect of reducing hardness, and if the vegetable oil is added in an amount of more than 120 parts by weight, it will deteriorate durability. For these reasons, the vegetable oil is preferably added in an amount of 10 to 120 parts by weight.

In addition, a styrene-based block copolymer may be added in an amount of 5 to 100 parts by weight based on 100 parts by weight of the PBT resin, and a paraffin-based oil may be added in an amount of 5 to 100 parts by weight based on 100 parts by weight of the PBT resin.

In order to provide a composition having excellent weather resistance, cold resistance, heat resistance and oil resistance, a styrene-based block copolymer (polystyrene-elastomer block copolymer (TPR)), which has relatively good compatibility and miscibility with the PBT resin, and a paraffin-based oil, may be added.

If the block copolymer is added in an amount of less than 5 parts by weight, it will not exhibit the effect of improving compatibility and miscibility, and if the block copolymer is added in an amount of more than 100 parts by weight, it will reduce economic efficiency.

In order to improve processability and reduce hardness, a paraffin-based oil may be used instead of the environmentally friendly plasticizer or the vegetable oil. If the paraffin-based oil may be added in an amount of more than 100 parts by weight, it will reduce durability and economic efficiency. For this reason, the paraffin-based oil is preferably added in an amount of 10 to 100 parts by weight.

In addition, an acrylic rubber, an acrylic rubber-based copolymer, a butadiene rubber or a butadiene-based copolymer may also be added in an amount of 10 to 100 parts by weight based on 100 parts by weight of the PBT resin.

A core-shell type copolymer is mainly used as a PVC impact modifier and has a double structure composed of a core portion and a shell portion. The shell portion is mainly made of a resin such as acrylic or SAN resin, and the core portion is made of rubber such as acrylic rubber, butadiene rubber or silicone rubber.

The butadiene-based copolymer is widely used due to its excellent compatibility with other resins, and the acrylic or silicone-based copolymer is mainly used as an impact modifier to improve weather resistance. These copolymers are spherical powders, have a good ability to absorb oils or plasticizers, and show good compatibility with PBT, PET-G and TPEE resin. If this copolymer is added in an amount of less than 10 parts by weight, it will not exhibit the effect of improving compatibility and miscibility, and if the copolymer is added in an amount of more than 100 parts by weight, it will reduce economic efficiency.

The recyclable, environmentally friendly laminated fabric composed of the PBT elastomer and the polyester-based fabric according to the present invention as described above may be used for general applications such as furniture or bags, has excellent processability, adhesiveness, printability and weather resistance, has good heat resistance and cold resistance compared to PVC, and may replace PVC resin-laminated fabrics which could not be replaced with laminated fabrics composed of various fabrics and polyurethane, PP, PE or an olefinic elastomer.

In addition, generally, an air boat or an air tube is made of rubber or PVC tarpaulin, and is required to have excellent water resistance and adhesiveness, and for this reason, hydrolysable polyurethane or a PP, PE or olefinic elastomer resin having poor adhesiveness cannot be used for such air boats or air tubes. In addition, an air boat or air tube made of rubber and a fabric is heavy in weight, and an air boat or air tube made of PVC resin tarpaulin is difficult to use in winter, due to its poor cold resistance. In addition, tarpaulin, which is used for printed advertising boards, is also used in a mixture with an olefinic elastomer replacing a portion of PP or PE, but is used in very limited cases due to its poor adhesiveness and printability, and PVC tarpaulin is used in most cases. A fabric for a laminated fabric comprising a resin such as PVC or polyurethane, which has excellent physical properties, is composed of cotton or a polyester-based fabric, and this laminated fabric is not recyclable due to heterogeneity due to the fabric and the resin. However, the recyclable, environmentally friendly laminated fabric of the present invention is a 100% recyclable, environmentally friendly laminated fabric.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A recyclable laminated fabric produced by laminating a polybutylene terephthalate (PBT) elastomer on a polyester fabric to a predetermined thickness.

2. The recyclable laminated fabric of claim 1, wherein the PBT elastomer comprises a mixture of 100 parts by weight of a PBT resin, 10 to 120 parts by weight of an environmentally friendly plasticizer, and 10 to 120 parts by weight of a thermoplastic copolyester elastomer (TPEE) resin.

3. The recyclable laminated fabric of any one of the previous claims, wherein 20 to 100 wt% of the PBT resin is replaced with PET-G (glycol-modified polyethylene terephthalate) resin.

4. The recyclable laminated fabric of any one of the previous claims, wherein the PBT elastomer further comprises, based on 100 parts by weight of the PBT resin, 5 to 100 parts by weight of a styrene-based block copolymer and 5 to 100 parts by weight of a paraffin-based oil.

5. The recyclable laminated fabric of any one of the previous claims, wherein the PBT elastomer further comprises, based on 100 parts by weight of the PBT resin, 10 to 100 parts by weight of an acrylic rubber, an acrylic rubber-based copolymer, a butadiene rubber or a butadiene rubber-based copolymer.

6. The recyclable laminated fabric of any one of the previous claims, wherein the PBT elastomer further comprises, based on 100 parts by weight of the PBT resin, 10 to 120 parts by weight of a vegetable oil.

7. The recyclable, laminated fabric of any one of the previous claims, wherein the laminated fabric is environmentally friendly.

8. The recyclable, laminated fabric of any one of the previous claims, wherein the laminated fabric is part of a product designed for being brought into contact with water.

9. The recyclable, laminated fabric of claim 8, the product being an air boat or a water tube.

10. The recyclable, laminated fabric of any one of the previous claims 1-8, wherein the laminated fabric is or is part of a printable fabric.

11. The recyclable, laminated fabric of claim 10, wherein the laminated fabric is a fabric for banner printing.

## Amended claims

### Amended claims in accordance with Rule 137(2) EPC.

1. A recyclable laminated fabric produced by laminating a substance, namely
a) a polybutylene terephthalate (PBT) elastomer having a processing temperature range from 200°C to 280°C, wherein the PBT elastomer comprises a crystalline PBT resin as a main material, wherein the PBT resin is produced by reacting terephthalic acid with 1,4-butanediol or
b) an elastomer comprising a resin as a main material, wherein the resin comprises 20 wt% to 100 wt% of a non-crystalline glycol-modified polyethylene terephthalate (PET-G) resin and 0 wt% to 20 wt% of a crystalline PBT resin
on a polyester fabric to a predetermined thickness.

2. The recyclable laminated fabric of claim 1 a), wherein the PBT elastomer comprises a mixture of 100 parts by weight of a PBT resin, 10 to 120 parts by weight of an plasticizer and 10 to 120 parts by weight of a thermoplastic copolyester elastomer (TPEE) resin.

3. The recyclable laminated fabric of claim 1, wherein the substance comprises 100 parts by weight of the elastomer according to claim 1 b), 10 to 120 parts by weight of an plasticizer and 10 to 120 parts by weight of a thermoplastic copolyester elastomer (TPEE) resin.

4. The recyclable laminated fabric of any one of the previous claims, wherein the PBT elastomer further comprises, based on 100 parts by weight of the PBT resin, 5 to 100 parts by weight of a styrene-based block copolymer and 5 to 100 parts by weight of a paraffin-based oil.

5. The recyclable laminated fabric of any one of the previous claims, wherein the PBT elastomer further comprises, based on 100 parts by weight of the PBT resin, 10 to 100 parts by weight of an acrylic rubber, an acrylic rubber-based copolymer, a butadiene rubber or a butadiene rubber-based copolymer.

6. The recyclable laminated fabric of any one of the previous claims, wherein the PBT elastomer further comprises, based on 100 parts by weight of the PBT resin, 10 to 120 parts by weight of a vegetable oil.

7. The recyclable, laminated fabric of any one of the previous claims, wherein the laminated fabric is fully recyclable.

8. The recyclable, laminated fabric of any one of the previous claims, wherein the laminated fabric is part of a product designed for being brought into contact with water.

9. The recyclable, laminated fabric of claim 8, the product being an air boat or a water tube.

10. The recyclable, laminated fabric of any one of the previous claims 1-8, wherein the laminated fabric is or is part of a printable fabric.

11. The recyclable, laminated fabric of claim 10, wherein the laminated fabric is a fabric for banner printing.
